# EUROPÄISCHE PATENTSCHRIFT

(11) **EP 3 074 133 B1**
(45) Veröffentlichungstag und Bekanntmachung des Hinweises auf die Patenterteilung: **13.06.2018**
(21) Anmeldenummer: 16704857.8
(22) Anmeldetag: 18.02.2016
(51) Int. Cl.: B01L 3/00, B01L 9/06, G01N 1/40

(54) **FILTRATIONSVORRICHTUNG FÜR FLÜSSIGE PROBEN**
FILTRATION DEVICE FOR LIQUID SAMPLES
DISPOSITIF DE FILTRATION POUR ÉCHANTILLONS LIQUIDES

(30) Priorität: 19.02.2015 DE 102015102350
(43) Veröffentlichungstag der Anmeldung: 05.10.2016
(73) Patentinhaber: Sartorius Stedim Biotech GmbH, 37079 Göttingen (DE)
(72) Erfinder: FRISSE, Andrea, 37085 Göttingen (DE); GRAUS, Andreas, 37176 Nörten-Hardenberg (DE)
(74) Vertreter: Michalski Hüttermann & Partner Patentanwälte mbB
(86) Internationale Anmeldenummer: PCT/EP2016/053426
(87) Internationale Veröffentlichungsnummer: WO 2016/131904

(56) Entgegenhaltungen:
- EP-A2- 0 297 441
- WO-A2-2005/055814
- WO-A2-2011/122841
- Ge Healthcare Life Sciences: "Speed up your (U)HPLC sample prep with Mini-UniPrep", , 1. November 2010 (2010-11-01), Seiten 1-2, XP055267654, Gefunden im Internet: URL:https://www.gelifesciences.com/gehcls_ images/GELS/Related Content/Files/1357557342993/litdoc28988604 _20130428234822.pdf [gefunden am 2016-04-21]

## Beschreibung

### TECHNISCHES GEBIET

Die vorliegende Offenbarung betrifft eine Filtrationsvorrichtung für flüssige Proben.

### HINTERGRUND

Die folgende Beschreibung des Hintergrunds der Offenbarung wird lediglich bereitgestellt, um dem Leser das Verständnis zu erleichtern; es wird nicht zugestanden, dass sie Stand der Technik darstellt oder beschreibt.

Filtrationsvorrichtungen für flüssige Proben sind bereits seit längerem auf dem Markt erhältlich. Ein System mit dem Namen Mini UniPrep® der Firma GE/Whatman® besteht aus einem Kolben mit einer am Boden des Kolbens angeordneten Filtermembran und einem darüber liegenden Auffangvolumen. Besagter Kolben ist formschlüssig zu einem Probengefäß ausgebildet und wird in letzteres, das eine zu filtrierende flüssige Probe enthält, eingeschoben und bis auf dessen Boden gedrückt. Dabei passiert die zu filtrierende flüssige Probe die Filtermembran, und das Filtrat gelangt in das darüber angeordnete Auffangvolumen. Die bei der Filtration zurückbleibenden Partikel werden durch die Filtermembran auf den Boden des Probengefäßes gedrückt.

Nach der Filtration verbleibt das Filtrat in dem Auffangvolumen und steht dabei in dauerhaftem Kontakt mit der Filtermembran. Dabei können Stoffe aus der Filtermembran in die Probenflüssigkeit diffundieren und diese so verunreinigen.

Eine Weiterentwicklung dieses Produkts enthält ein Glasauffanggefäß innerhalb des Kolbens, in welches das Filtrat nach der Filtration aus dem Auffangvolumen verbracht wird. Auf diese Weise wird ein dauerhafter Kontakt des Filtrats mit der Filtermembran unterbunden und so die besagten Kontaminationen deutlich reduziert. Das Produkt ist jedoch sehr aufwändig in der Herstellung, besteht aus vielen Teilen und birgt die Gefahr von Glasbruch, da beim Eindrucken des Kolbens in das Probengefäß ein großer Druck ausgeübt werden muss. Es kann daher ausschließlich mit passenden Durchdrückeinheiten verwendet werden, um die Umwelt vor Glasbruch zu schützen, auch wenn nur eine einzelne Probe filtriert wird.

Ein anderes System mit dem Namen Samplicity® der Firma Millipore® besteht aus einer Vakuumvorrichtung, in welche ein oder mehrere Auffanggefäße eingebracht werden können. Anschließend wird ein Membrantrichter auf jedes Auffanggefäß aufgebracht, das Gehäuse der Vakuumvorrichtung wird geschlossen und ein Vakuum angelegt. Dabei wird die flüssige Probe durch den Filter des Membrantrichters gesogen und tropft dann in das Auffanggefäß.

Dieses System stellt neben den hohen technischen Ansprüchen an die Vakuumvorrichtung auch hohe technische Ansprüche an die verwendeten Membrantrichter. Sowohl die Vakuumvorrichtung als auch die Membrantrichter weisen eine hohe technische Komplexität auf. Ferner ist eine Unterdruckquelle erforderlich, beispielsweise eine Vakuumpumpe.

Dabei zeigt sich auch, dass die Anwendung von Unterdruck den Filtrationsprozess weniger effizient antreibt als der beispielsweise in dem UniPrep®-System verwendete Überdruck. Dies führt zu einer insgesamt längeren Filtrationsdauer.

Anders als bei einem händischen Filtrationsprozess ist bei einem per Pumpe angetriebenen System überdies der Filtrationsprozess nur schwer zu dosieren, und es entsteht ein Betriebsgeräusch, das störend wirken kann.

Es besteht somit Bedarf an einer Vorrichtung, die die Nachteile aus dem Stand der Technik vermeidet. Vorteilhaft wäre es des Weiteren, eine Filtrationsvorrichtung und ein Filtrationsverfahren zu schaffen, das eine Kontamination des Filtrats vermeidet und sicher und reproduzierbar anwendbar ist. Auch wäre es wünschenswert, eine Filtrationsvorrichtung und ein Filtrationsverfahren zu schaffen, das geringe Anforderungen an Material und technische Peripherie stellt, einen hohen Durchsatz ermöglicht, und geringe Kosten verursacht.

Weitere Filtrationsvorrichtungen sind bereits im WO 2005/055814, WO 2011/122841 und EP0297441 offenbart.

### ZUSAMMENFASSUNG

Die vorliegende Offenbarung kann allgemein dahingehend aufgefasst werden, dass sie Mittel zum Entfernen von nicht gelösten Stoffen wie Partikeln aus einer flüssigen Probe bereitstellt.

Die vorliegende Erfindung betrifft eine Filtrationsvorrichtung gemäß dem unabhängigen Patentanspruche 1, ein Kit gemäß Patentanspruch 9 und eine Schließ- und Durchdrückvorrichtung gemäß Patentanspruch 10.

Gemäß einem ersten Aspekt wird eine Filtrationsvorrichtung für flüssige Proben bereitgestellt. Die Filtrationsvorrichtung weist einen Tubus auf. Der Tubus weist eine Eingangs- und eine Ausgangsseite auf, die eine Längsrichtung definieren. Die Filtrationsvorrichtung weist auch eine quer zur Längsrichtung angeordnete Filterfläche auf. Des Weiteren weist die Filtrationsvorrichtung einen Kolben auf. Der Kolben ist formschlüssig von der Eingangsseite ausgehend in den Tubus einführbar, dergestalt, dass eine in dem Tubus oberhalb der Filterfläche befindliche flüssige Probe durch die Filterfläche gepresst wird. Der Kolben ist dabei i.d.R. mittels eines Scharniers mit dem Tubus verbunden.

In einigen Ausführungsformen weist die Filtrationsvorrichtung genau einen Tubus auf. In einigen Ausführungsformen weist die Filtrationsvorrichtung genau einen Kolben auf, der formschlüssig von der Eingangsseite ausgehend in den Tubus einführbar ist. In einigen Ausführungsformen weist die Filtrationsvorrichtung genau einen Tubus und genau einen Kolben auf, der formschlüssig von der Eingangsseite ausgehend in den Tubus einführbar ist.

Die Filterfläche ist i.d.R. im Inneren des Tubus angeordnet. Dabei ist die Filterfläche typischerweise quer zur Längsrichtung des Tubus angeordnet. Wird eine flüssige Probe unter einem Gas wie Luft filtriert, bewirkt das Einführen des Kolbens in den Tubus, dass ein Gaspolster, z.B. ein Luftpolster miteingeschlossen wird. Im Verlauf des Einführvorgangs wird dieses Gaspolster komprimiert. Dieses Gaspolster (z.B. Luftpolster) sorgt zum einen für einen nur geringen Kontakt der zu filtrierenden flüssigen Probe mit dem Kolben, und zum anderen zu einem vollständigen durchfiltrieren der flüssigen Probe durch die Filterfläche. Bei sehr groben Filtern wird das Gaspolster sogar mit durchgedrückt und reinigt auch den Filter größtenteils von Flüssigkeitsresten, was die Ausbeute erheblich verbessert.

Die Filtrationsvorrichtung gemäß dem ersten Aspekt schafft so eine Filtrationslösung, die ohne die herkömmlicherweise verwendeten Einwegspritzten auskommt, und lässt sich folglich beispielsweise mit einer modernen Kolbenhubpipette beschicken, beispielsweise der Marken Picus®, eLine® oder mLine® von Sartorius®. Bei gereihter Anordnung kann die Filtrationsvorrichtung auch mit einer Mehrkanalpipette beschickt werden.

Die Filtrationsvorrichtung gemäß dem ersten Aspekt ist extrem einfach in der Handhabung und besteht typischerweise aus nur wenigen Einzelkomponenten. Sie kann rein mit Körperkraft betrieben werden und macht eine externe Kraft- bzw. Antriebsquelle, wie z.B. eine Vakuumpumpe, Druckpumpe, oder eine Zentrifuge, überflüssig. Dies schließt freilich nicht aus, dass eine solche externe Kraft- bzw. Antriebsquelle, wenn gewünscht, eingesetzt werden kann.

Überdies ist ein Verfahren, bei welchem die Flüssigkeit mittels Druck durch einen Filter gepresst wird, schneller als ein Verfahren, bei welchem eine Flüssigkeit mittels Unterdruck durch einen Filter gesogen wird, da es i.d.R. länger dauert, bis sich ein ausreichender Unterdruck aufgebaut hat, während sich ein Überdruck sehr schnell aufbauen lässt. Überdies ist es möglich, dass der Kolben direkt die Flüssigkeit durch den Filter presst, und nicht vermittels atmosphärischen Überdrucks.

Die Filtrationsvorrichtung gemäß dem ersten Aspekt weist überdies den Vorteil auf, dass die zu filtrierende flüssige Probe nur kurz mit der Filterfläche in Berührung kommt und insbesondere nach dem Filtrationsprozess der Kontakt des Filtrats zur Filterfläche unterbrochen ist. Auf diese Weise kann verhindert werden, dass aus dem Filtermaterial Stoffe in die Probenflüssigkeit diffundieren und diese so verunreinigen.

Die Eingangsseite des Tubus weist eine Aufnahmeöffnung auf. Der Kolben wird in Gebrauch üblicherweise in die Aufnahmeöffnung eingeführt. Nach Beendigung des Filtrationsprozesses kann der in den Tubus eingeführte Kolben überdies als Deckel dienen.

Der Tubus ist ein Hohlzylinder von rundem Querschnitt. Der Tubus hat dabei in einigen Ausführungsformen einen ellipsoiden Querschnitt. Typischerweise ist der Tubus ein senkrechter Hohlzylinder, d.h. ein Hohlzylinder mit mindestens einem Ende, das eine Fläche definiert, die im Wesentlichen senkrecht zur Längsachse des Hohlzylinders steht. In einigen Ausführungsformen definiert die Aufnahmeöffnung, also die Öffnung des Tubus, der die Filterfläche zugewandt ist, eine Ebene, die senkrecht zur Längsachse des Tubus steht. In einigen Ausführungsformen definieren beide Enden des Tubus eine Ebene, die senkrecht zur Längsachse des Tubus steht. In einigen Ausführungsformen ist der Tubus ein Kreishohlzylinder, d.h. der Tubus hat einen kreisförmigen Querschnitt. Dabei definiert die Aufnahmeöffnung in einigen Ausführungsformen eine Ebene, die senkrecht zur Längsachse des Tubus steht. In einigen Ausführungsformen ist der Tubus ein Kreishohlzylinder und beide Enden des Tubus definieren eine Ebene, die senkrecht zur Längsachse des Tubus steht.

Die zu filtrierenden Proben können beispielsweise Proben für die chemische oder biologische Analytik sein oder Proben für die chemische oder biologische Weiterverarbeitung. Hier kommt es üblicherweise darauf an, die Probe von Kontaminanten oder Fremdstoffen wie Partikeln zu befreien, um die sich anschließenden analytischen (HPLC, RCR, GC, MS, FPLC, Sequenzierung) oder präparativen (rekombinante Biotechnologie) Schritte nicht zu beeinträchtigen.

Tubus und/oder Kolben können ein Thermoplast aufweisen. In einigen Ausführungsformen sind Tubus und/oder Kolben aus einem Thermoplast gefertigt. Zu Beispielen eines geeigneten Thermoplasten zählen Polyethylen (PE) und High Density Polyethylen (HDPE). Ein geeigneter Thermoplast, der in Tubus und/oder Kolben enthalten sein kann, ist auch Polypropylen (PP). In einigen Ausführungsformen sind Tubus und/oder Kolben aus Polyvinylchlorid (PVC) gefertigt oder enthalten dieses. Weitere Beispielen eines geeigneten Thermoplasten sind, ohne darauf beschränkt zu sein, Polycarbonat (PC), Copolyester, Acrylstyrolbutadiencopoloymer (ABS) und Styrolacrynitril (SAN).

Tubus und/oder Kolben können ein Elastomer aufweisen. In einigen Ausführungsformen sind Tubus und/oder Kolben aus einem Elastomer gefertigt. Ein Beispiel eines geeigneten Elastomers ist Ethylen-Propylen-Dien-Monomer (EPDM). Ein weiteres Beispiel eines geeigneten Elastomers ist Flüssigsilikon (LSR). Tubus und/oder Kolben können ein thermoplastisches Elastomer aufweisen. In einigen Ausführungsformen sind Tubus und/oder Kolben aus einem thermoplastischen Elastomer gefertigt. Ein entsprechendes thermoplastisches Elastomer kann beispielsweise ein thermoplastisches Elastomer auf Urethanbasis oder ein Styrol-Blockcopolymer sein.

In einigen Ausführungsformen weisen Tubus und/oder Kolben einen Mehrkomponentenkunststoff auf. In einigen Ausführungsformen sind Tubus und/oder Kolben aus einem Mehrkomponentenkunststoff gefertigt. Zu geeigneten Mehrkomponentenkunststoffen zählen beispielsweise eine Mischung aus Polyethylen (PE) und Polypropylen (PP), Polypropylen (PP) und einem thermoplastischen Elastomer, Polycarbonat und einem thermoplastischen Elastomer, und Acrylstyrolbutadiencopoloymer (ABS) und Polypropylen (PP).

Die Auswahl des Kunststoffes hängt dabei insbesondere von den Kosten für das Herstellungsverfahren der Filtrationsvorrichtung ab. In einer speziellen Ausführungsform ist die Vorrichtung als Einwegartikel gedacht, so dass für solche Anwendungen aus Kostengründen, der inerten Eigenschaften, der mechanischen Belastbarkeit und der Temperaturbeständigkeit insbesondere die bekannten spritzgussfähigen Thermoplaste Polyethylen, Polypropylen, Polyvinylidenfluorid oder Polyetheretherketon verwendet werden. Hart-Polyethylen (High Density Polyethylen), das eine hohe Beständigkeit gegen Chemikalien, mechanische Beanspruchung und Temperaturextreme aufweist, ist ebenfalls möglich.

Tubus und/oder Kolben sind überdies in einigen Ausführungsformen aus einem durchscheinenden oder aus einem transparenten Material hergestellt. Dadurch kann ein Einblick in den Filtrationsprozess möglichwerden.

Auf die Filterfläche kann grundsätzlich jeder gewünschte Filter, inklusive einer porösen Scheibe oder eines Siebs, platziert werden, vorausgesetzt er ist von geeigneter Geometrie und erfüllt die gewünschten Anforderungen an Stabilität und/oder Dichtheit bzw. Filtrationseigenschaften. In einigen Ausführungsformen ist dabei vorgesehen, dass die Filterfläche als Träger für eine Filtermatrix fungiert.

In einigen Ausführungsformen kommt als Material für die Filtermatrix PTFE zum Einsatz. Die Filtermatrix kann dabei vollständig aus PTFE bestehen oder dieses enthalten. In einigen Ausführungsformen enthält die Filtermatrix Polyethersulfon, Papier, regenerierte Cellulose, Nitrocellulose, Glasfaser, Nylon, und/oder Cellulose-Acetat. Jedes dieser Materialien kann auch mit PTFE kombiniert werden. In einigen Ausführungsformen besteht die Filtermatrix aus Polyethersulfon, Papier, regenerierter Cellulose, Nitrocellulose, Glasfaser, Nylon oder Cellulose-Acetat. Die Filtermatrix ist in einigen Ausführungsformen in Form einer Membran ausgebildet. In einigen Ausführungsformen weist die Filtermatrix eine mittlere Porengrößen von ≤ 100 µm bis ≥ 0,01 µm auf. Beispielsweise kann die Filtermatrix eine mittlere Porengrößen von ≤ 10 µm bis ≥ 0,1 µm aufweisen. In einer Ausführungsform weist die Filtermatrix mittlere Porengrößen von ≤ 0,45 µm bis ≥ 0,2 µm auf.

In einigen Ausführungsformen ist die Filtermatrix reversibel mit der Filterfläche verbunden. In einigen Ausführungsformen wird die Filtermatrix in einen Stützträger eingebracht, bei dem die Filtermatrix auf einer Filterfläche aufliegt oder an dieser fixiert wird und von oben mit einem sich über die gesamte Fläche der Filtermatrix erstreckenden, durchgängigen Abstandshalter zum runtergedrückten Kolben versehen wird. In einigen Ausführungsformen ist die Filtermatrix lediglich von unten an dem Filtermaterial fixiert.

Dabei ist in einigen Ausführungsformen vorgesehen, dass die Fixierung dergestalt ausgeführt ist, dass in Richtung der Eingangsseite keinerlei Totvolumen zwischen der Filtermatrix und dem vollständig in den Tubus eingeführten Kolben entsteht. Dies wird beispielsweise dadurch bewerkstelligt, dass in Richtung der Eingangsseite kein Klemmring vorgesehen ist, der die Filtermatrix auf der Filterfläche hält. Dies kann beispielsweise durch Hitzesiegeln, Ultraschall, Kleben, oder Klemmen erfolgen. So adhäriert die Filtermembran beispielsweise bei der thermischen Fixierung auf der beispielsweise aus Polypropylen (PP) bestehenden Filterfläche, ohne dass in Richtung der Eingangsseite keinerlei Totvolumen zwischen der Filtermembran und dem vollständig in den Tubus eingeführten Kolben entsteht.

In einer beispielhaften Ausgestaltung ist vorgesehen, dass der Kolben auf seiner der Filterfläche zugewandten Seite eine randständig umlaufende Erhebung aufweist. Mithilfe dieser randständig umlaufenden Erhebung wird beim Einführen des Kolbens in den Tubus verhindert, dass die Filtermatrix verletzt wird, beispielsweise durch zwischen Kolben und Filtermatrix befindliche Partikel oder durch Unebenheiten der Filterfläche. Es wird ferner eine Adhäsion der Filtermatrix an den Kolben verhindert. Dabei kann ein etwaig sich durch die randständig umlaufende Erhebung einstellendes minimales Totvolumen ggf. akzeptiert werden.

Die randständig umlaufende Erhebung drückt die Filtermatrix dabei ggf. randständig auf den Filterträger. Bevorzugt ist dabei vorgesehen, dass die randständig umlaufende Erhebung so ausgestaltet ist, dass sie beim Einführen des Kolben in den Tubus in eine entsprechend ausgeformte Nut in der Filterfläche, oder in einem die Filterfläche umgebenden Rand, eingreift. Auf diese Weise wird ein sich zwischen der Filterfläche bzw. der Filtermatrix und dem Kolben einstellendes Totvolumen minimiert.

In einigen Ausführungsformen ist weiterhin vorgesehen, dass die Filterfläche in Richtung der Ausgangsseite des Tubus eine Tropfenführung, auch Drip Director genannt, aufweist. Der Drip Director kann beispielsweise wie ein unterhalb der Filterfläche angeordneter Trichter ausgebildet sein, der den die Filterfläche passierenden Flüssigkeitsstrom zielsicher in ein darunter angeordnetes Auffanggefäß leitet.

Der Tubus weist auf der Seite, der die Filterfläche zugewandt ist, eine Aufnahmeöffnung auf. In einigen Ausführungsformen befindet sich zwischen der Filterfläche und der Aufnahmeöffnung ein leerer Raum, der von Umgebungsgas, beispielsweise Luft, eingenommen wird.

In einigen Ausführungsformen ist ferner vorgesehen, dass Kolben und Tubus beweglich miteinander verbunden sind. So kann beispielsweise der Kolben mittels eines Scharniers mit dem Tubus verbunden sein. Bei einem solchen Scharnier kann es sich beispielsweise um ein Filmscharnier handeln. In einer solchen Ausführungsform kann die Kombination aus Tubus und Kolben in einem Stück hergestellt sein, beispielsweise mittels Spritzgussverfahren.

In einigen Ausführungsformen ist vorgesehen, dass der Kolben zur Abdichtung gegen die Innenwand des Tubus eine umlaufende Wulst aufweist. In einigen Ausführungsformen weist der Kolben zur Abdichtung gegen die Innenwand des Tubus eine umlaufende Nut für einen Dichtungsring auf. Die umlaufende Wulst kann dabei integraler Bestandteil des Kolbenmaterials sein und beispielsweise beim Spritzgiessen des Kolbens direkt mit ausgeformt sein. Alternativ kann die umlaufende Wulst mittels 2K-Verfahren an den Kolben angeformt sein, beispielsweise durch Anspritzen. Hierbei wird bevorzugt ein Material mit besseren Dichteigenschaften (weicher bzw. elastischer) verwendet. Auf diese Weise kann der Kolben leichtgängiger gemacht und die Dichtung gleichzeitig verbessert werden.

In einigen Ausführungsformen kann der Kolben auch ohne umlaufende Wulst oder Dichtungsring ausgebildet sein. In diesem Fall wird der Dichtungseffekt durch einen ausreichend hohen Formschluss zwischen Kolben und Tubus erreicht.

In einigen Ausführungsformen ist vorgesehen, dass die Filtrationsvorrichtung eine an der Außenwand des Tubus angeordnete Führungshilfe aufweist. In einigen Ausführungsformen ist vorgesehen, dass die Filtrationsvorrichtung eine auf der Richtung Eingangsseite weisenden Seite des Kolbens angeordnete Führungshilfe aufweist.

Besagte an der Außenwand des Tubus angeordnete Führungshilfe kann beispielsweise in Längsrichtung an der Tubusaußenwand angeordnet sein, beispielsweise in Form eines Führungsstegs, der in eine entsprechende Nut in einem Stellplatz für ein Auffanggefäß mit darauf angeordneter Filtrationsvorrichtung eingreift und so eine reproduzierbare Ausrichtung der Filtrationsvorrichtung ermöglicht.

In einigen Ausführungsformen weist die Führungshilfe eine Nut auf, die in einen entsprechenden Führungssteg an dem Stellplatz eingreift. Die Führungshilfe kann ebenso als Nut ausgebildet sein, die in einen entsprechenden Führungssteg an dem Stellplatz eingreift.

Besagte auf der Richtung Eingangsseite weisenden Seite des Kolbens - also auf der "Oberseite" des Kolbens - angeordnete Führungshilfe kann beispielsweise in Form eines Stegs ausgebildet sein, der in eine entsprechende Nut in einer Schließ- und Durchdrückvorrichtung eingreift, bei deren Betätigung der Kolben mittels einer reproduzierbaren Bewegung in den Tubus eingeführt wird, dergestalt, dass eine in dem Tubus oberhalb der Filterfläche befindliche flüssige Probe durch die Filterfläche gepresst wird.

In einigen Ausführungsformen weist die Führungshilfe eine Nut auf, die in einen entsprechenden Steg an der Schließ- und Durchdrückvorrichtung eingreift. Die Führungshilfe kann ebenso als Nut ausgebildet sein, die in einen entsprechenden Steg an der Schließ- und Durchdrückvorrichtung eingreift.

In einigen Ausführungsformen weist die Filtrationsvorrichtung eine Mehrzahl an Tuben auf. In einigen Ausführungsformen weist die Filtrationsvorrichtung eine Mehrzahl an Kolben auf, die formschlüssig von der Eingangsseite ausgehend in den Tubus einführbar sind. In einigen Ausführungsformen weist die Filtrationsvorrichtung eine Mehrzahl an Tuben und eine Mehrzahl an Kolben auf, von denen wenigstens ein Kolben formschlüssig von der Eingangsseite ausgehend in wenigstens einen Tubus einführbar ist.

Gemäß einem zweiten Aspekt wird weiterhin ein Kit bereitgestellt. Das Kit weist eine Filtrationsvorrichtung gemäß dem ersten Aspekt und einem Auffanggefäß auf. In einigen Ausführungsformen besteht das Kit aus einer Filtrationsvorrichtung gemäß dem ersten Aspekt und einem Auffanggefäß.

Das Auffanggefäß kann aus jedem gewünschten Material bestehen, solange es die gewünschten Eigenschaften hinsichtlich Beständigkeit gegenüber dem Permeat aufweist. Das Auffanggefäß weist in einigen Ausführungsformen Glas auf. In einigen Ausführungsformen weist das Auffanggefäß Polypropylen auf. Das Auffanggefäß kann auch ein anderes geeignetes Material aufweisen. Dabei können beispielsweise klare oder braune Glasfläschchen, optional mit zusätzlichen Violen-Einsätze für geringe Probenvolumina, zum Einsatz kommen.

Das Auffanggefäß weist in einigen Ausführungsformen ein Volumen im Bereich zwischen ≥ 0,05 und ≤ 2 ml auf. Handelsübliche Auffanggefäße wie sie z.B. für die HPLC eingesetzt werden, sind z.B. in der Größe 12x32 mm erhältlich.

In einer Ausführungsform dieses Kits kann das Auffanggefäß auch integraler Bestandteil der Filtrationsvorrichtung sein. In diesem Falle kann überdies eine Sollbruchstelle zwischen dem Auffanggefäß und der Filtrationsvorrichtung vorgesehen sein, mittels welcher letztere nach dem Filtrationsprozess entfernt werden kann, sodass das Auffanggefäß dann für anschließende Verfahrensschritte verwendet werden kann.

Das Auffanggefäß weist in einigen Ausführungsformen einen Außendurchmesser auf, der geringer ist als der Innendurchmesser der Ausgangsseite des Tubus der Filtrationsvorrichtung gemäß dem ersten Aspekt. Auf diese Weise läßt sich letzteres vor dem Filtrationsprozess auf das Auffanggefäß aufsetzen. In einigen Ausführungsformen wird der Tubus bis zur Unterseite der Filterfläche über das Auffanggefäß gestülpt. Dadurch bekommt ein Kit aus Filtrationsvorrichtung und Auffanggefäß eine zusätzliche Stabilität, da die auf dem Auffanggefäß sitzende Filtrationseinheit nicht seitlich vom Auffanggefäß fallen oder geschoben werden kann.

Gemäß einem dritten Aspekt wird weiterhin eine Schließ- und Durchdrückvorrichtung für eine Filtrationsvorrichtung gemäß dem ersten Aspekt bereitgestellt. Die Schließ- und Durchdrückvorrichtung weist einen Standfuß auf. Die Schließ- und Durchdrückvorrichtung weist des Weiteren einen oder mehrere an dem Standfuß angeordneten Stellplätze für ein oder mehrere Auffanggefäße auf. Die Schließ- und Durchdrückvorrichtung weist auch einen an dem Standfuss anscharnierten Deckel auf. Dieser Deckel ist so ausgestaltet ist, dass bei einer Schließbewegung des Deckels um die Scharnierachse in Richtung des Standfußes ein Kolben einer Filtrationseinrichtung in den Tubus einer Filtrationsvorrichtung eingeführt wird. Die Filtrationsvorrichtung ist auf einem in dem Stellplatz befindlichen Auffanggefäß angeordnet.

In einigen Ausführungsformen weist die Schließ- und Durchdrückvorrichtung einen einzigen Standfuß auf. In einigen Ausführungsformen weist die Schließ- und Durchdrückvorrichtung genau einen an dem Standfuss anscharnierten Deckel auf.

Besagter einer Stellplatz oder mehrere Stellplätze für ein Auffanggefäß kann/können dabei als senkrechte Aussparung in dem Standfuß ausgeführt sein, in welche das Auffanggefäß eingestellt werden kann. In einigen Ausführungsformen ist bei besagter Schließ- und Durchdrückvorrichtung vorgesehen, dass der Stellplatz für ein oder mehrere Auffanggefäße eine Führungshilfe für die Filtrationsvorrichtung bzw. den Tubus derselben aufweist. In einigen Ausführungsformen weist der Deckel eine Führungshilfe für den Kolben mindestens einer Filtrationsvorrichtung auf. In einigen Ausführungsformen weist der Stellplatz für mindestens ein Auffanggefäß eine Führungshilfe für die Filtrationsvorrichtung bzw. den Tubus derselben auf und der Deckel weist eine Führungshilfe für den Kolben mindestens einer Filtrationsvorrichtung auf.

Die Führungshilfe am Stellplatz für ein Auffanggefäß kann beispielsweise in Form einer Nut oder eines Steges ausgebildet sein, die bzw. der in einen bzw. eine entsprechenden Steg bzw. Nut an der Tubusaußenwand der Filtrationsvorrichtung eingreift. Die Führungshilfe am Deckel kann beispielsweise in Form einer Nut oder eines Steges ausgebildet sein, die bzw. der in einen bzw. eine entsprechenden Steg bzw. Nut auf der Richtung Eingangsseite weisenden Seite des Kolbens der Filtrationsvorrichtung eingreift.

Durch das Zusammenspiel der Führungshilfen am (i) Stellplatz für ein Auffanggefäss und (ii) an der Tubusaussenwand der Filtrationsvorrichtung wird eine stets reproduzierbare Ausrichtung der Filtrationsvorrichtung ermöglicht. Durch das Zusammenspiel der Führungshilfen am (i) Deckel der Schließ- und Durchdrückvorrichtung und (ii) an der auf der Richtung Eingangsseite weisenden Seite des Kolbens der Filtrationsvorrichtung wird ein automatisierter und stets reproduzierbarer Schließ- und Durchdrückvorgang ermöglicht.

Voraussetzung für letzteres ist, dass die Filtrationsvorrichtung in reproduzierbarer Art und Weise in dem Stellplatz ausgerichtet ist. Ferner wird besagter Schließ- und Durchdrückvorgang erleichtert, wenn der Kolben mittels eines Scharniers mit dem Tubus der Filtrationsvorrichtung verbunden ist, bevorzugt mit einem Filmscharnier. In dieser Ausgestaltung ist folglich das simultane Filtrieren einer Mehrzahl von Proben mittels händischer Betätigung schnell, sicher und reproduzierbar durchführbar.

In einigen Ausführungsformen ist dabei vorgesehen, dass der Stellplatz für ein Auffanggefäß aus dem Standfuß herausnehmbar ausgestaltet ist.

Auf diese Weise können beispielsweise mehrere Auffanggefäße außerhalb der Schließ- und Durchdrückvorrichtung in den Stellplatz eingestellt, die Filtrationsvorrichtungen auf den Auffanggefäßen angeordnet und/oder die flüssigen Proben in die Filtrationsvorrichtungen eingebracht werden.

In dieser Ausgestaltung ist z.B. das Arbeiten mit Mehrkanalpipetten erheblich erleichtert. Dabei kann der Stellplatz so beschaffen sein, dass er ein Abstandsmaß zwischen den einzelnen Auffanggefäßen vorgibt, dass dem Abstandsmaß von Mehrkanalpipetten entspricht. Anschließend wird der Stellplatz in den Standfuß verbracht und der Deckel der Schließ- und Durchdrückvorrichtung geschlossen. Dabei werden die Kolben der Filtrationsvorrichtungen in die Tuben letzterer eingeführt und die proben durch die Filterfläche gepresst. Letzterer Vorgang wird durch die optional an Tubusaußenwänden und Kolben der Filtrationsvorrichtungen bzw. Stellplätzen und Deckel der Schließ- und Durchdrückvorrichtung angeordneten Führungshilfen vereinfacht und automatisiert.

In einigen Ausführungsformen ist ferner vorgesehen, dass der herausnehmbare Stellplatz eine Ausnehmung oder Protrusion aufweist, die beim Verbringen in den Standfuß in eine komplementäre Protrusion oder Ausnehmung am Standfuß eingreift, um ein Umkippen des Stellplatzes zu verhindern. Eine solche Protrusion am Stellplatz kann beispielsweise einen Steg, eine Lippe oder einen oder mehrere Zapfen oder Dübel aufweisen, der bzw. die in entsprechende Ausnehmungen an dem Standfuss eingreift. Eine entsprechende Ausnehmung am Stellplatz kann beispielsweise eine Nut, einen Steg oder eine Bohrung aufweisen, der bzw. die in entsprechende Protrusionen an dem Standfuß eingreift.

In einigen Ausführungsformen weist die Schließ- und Durchdrückvorrichtung keine Bauteile auf, die so zwischen den Standfuß und den Deckel bewegt werden können, dass sie zwischen einem Kolben und einem Tubus der Filtrationsvorrichtung gemäß dem ersten Aspekt angeordnet werden können. In anderen Ausführungsformen kann die Schließ- und Durchdrückvorrichtung ein oder mehrere Bauteile aufweisen, die sich zwischen den Standfuß und den Deckel bewegen lassen. Ein solches Bauteil kann in einer derartigen Ausführungsform ggf. so angeordnet werden, dass es zwischen einem Kolben und einem Tubus der Filtrationsvorrichtung gemäß dem ersten Aspekt platziert ist.

In einigen Ausführungsformen besteht die Schließ- und Durchdrückvorrichtung im Wesentlichen aus einem Standfuß, einem an dem Standfuss anscharnierten Deckel, einem oder mehreren an dem Standfuß angeordneten Stellplätzen für jeweils ein oder mehrere Auffanggefäße und optional einer Ausnehmung oder Protrusion. Dabei kann der Stellplatz bzw. können die Stellplätze optional eine oder mehrere Führungshilfen für Tubuli einer Filtrationsvorrichtung gemäß dem ersten Aspekt aufweisen. Ebenso kann der Deckel eine oder mehrere Führungshilfen für Kolben von Filtrationsvorrichtungen gemäß dem ersten Aspekt aufweisen.

In einigen Ausführungsformen besteht die Schließ- und Durchdrückvorrichtung aus einem Standfuß, einem an dem Standfuß anscharnierten Deckel, einem oder mehreren an dem Standfuß angeordneten Stellplätzen für jeweils ein oder mehrere Auffanggefäße und optional einer Ausnehmung oder Protrusion. Dabei kann der Stellplatz bzw. können die Stellplätze optional eine oder mehrere Führungshilfen für Tubuli einer Filtrationsvorrichtung gemäß dem ersten Aspekt aufweisen. Ebenso kann der Deckel eine oder mehrere Führungshilfen für Kolben von Filtrationsvorrichtungen gemäß dem ersten Aspekt aufweisen.

Wertebereiche die in diesem Dokument durch numerische Werte begrenzt sind, sollen stets die betreffenden Grenzwerte beinhalten.

Soweit nicht anders angegeben oder aus dem Zusammenhang eindeutig eine andere Bedeutung ersichtlich ist, haben die folgenden Begriffe und Ausdrücke wenn sie in diesem Dokument, inklusive Beschreibung und Patentansprüchen, verwendet werden, die im Folgenden angegebenen Bedeutungen.

Der Ausdruck "bestehend aus" wie in diesem Dokument verwendet, bedeutet einschließend und begrenzt auf das, was dem Begriff "bestehend aus" folgt. Der Begriff "bestehend aus" gibt somit an, dass aufgeführte Elemente erforderlich oder notwendig sind und dass keine weiteren Elemente vorhanden sein dürfen. Der Begriff "im Wesentlichen bestehend aus" wird dahingehend verstanden, dass er bedeutet, dass jedwede Elemente, die nach dem Ausdruck definiert sind, umfasst sind und dass weitere Elemente, beispielsweise in einer Probe oder einer Zusammensetzung zugegen sein können, die die Aktivität oder Wirkung, die für die betreffenden Elemente in diesem Dokument angegeben sind, nicht verändern, also sie nicht beeinträchtigen und nicht zu ihr beitragen. Somit gibt der Ausdruck "im Wesentlichen bestehend aus" an, dass die definierten Elemente notwendig oder erforderlich sind, dass aber weitere Elemente optional sind und zugegen sein können oder nicht, je nachdem, ob sie für die Wirkung oder Wirksamkeit der definierten Elemente von Belang sind oder nicht.

Der Ausdruck "zumindest im Wesentlichen bestehend aus" wird, wenn hier verwendet, als die Begriffe "im Wesentlichen bestehend aus" und "bestehend aus" umfassend verstanden. Der Begriff "zumindest im Wesentlichen bestehend aus", gibt somit an, dass in einigen Ausführungsformen aufgeführte Elemente erforderlich oder notwendig sind und dass keine weiteren Elemente vorhanden sein dürfen. Der Begriff "zumindest im Wesentlichen bestehend aus", gibt somit auch an, dass in einigen Ausführungsformen aufgeführte Elemente erforderlich oder notwendig sind, dass aber weitere Elemente optional sind und zugegen sein können oder nicht, je nachdem, ob sie für die Wirkung oder Wirksamkeit der definierten Elemente von Belang sind oder nicht. Es wird weiterhin verstanden, dass geringe Abweichungen über oder unter einen hier angegebenen Bereich eingesetzt werden können, um ein im Wesentlichen gleiches Ergebnis zu erzielen wie ein Wert, der innerhalb des Bereichs liegt. Falls nicht anders angegeben, ist die Offenbarung eines Bereichs auch als kontinuierlicher Bereich vorgesehen, inklusive aller Einzelwerte, die zwischen dem Minimal- und dem Maximalwert liegen.

Das Wort "etwa" bezieht sich wenn hier verwendet auf einen Wert, der für einen bestimmten Wert, wie von einem Durchschnittsfachmann bestimmt, innerhalb eines akzeptablen Fehlerbereichs liegt. Dies wird teilweise davon abhängig sein, wie der jeweilige Wert ermittelt oder gemessen worden ist, d.h. von den Einschränkungen des Messsystems. "Etwa" kann beispielsweise innerhalb einer Standardabweichung von 1 oder mehr bedeuten, je nach Gebrauch im jeweiligen Gebiet. Der Begriff "etwa" wird auch verwendet um anzugeben, dass der Betrag oder Wert der bezeichnete Wert sein kann oder ein anderer Wert, der näherungsweise gleich ist. Der Begriff soll ausdrücken, dass ähnliche Werte gleichwertige Ergebnisse oder Wirkungen, wie in diesem Dokument offenbart, begünstigen. In diesem Zusammenhang kann "etwa" sich auf einen Bereich von bis zu 10 % über und/oder unter einem bestimmten Wert beziehen. In einigen Ausführungsformen bezieht "etwa" sich auf einen Bereich von bis zu 5 % über und/oder unter einem bestimmten Wert, wie etwa 2 % über und/oder unter einem bestimmten Wert. In einigen Ausführungsformen bezieht "etwa" sich auf einen Bereich von bis zu 1 % über und/oder unter einem bestimmten Wert. In einigen Ausführungsformen bezieht "etwa" sich auf einen Bereich von bis zu 0,5 % über und/oder unter einem bestimmten Wert. In einer Ausführungsform bezieht sich "etwa" auf einen Bereich von bis zu 0,1 % über und/oder unter einem bestimmten Wert.

Der Konjunktionalausdruck "und/oder" zwischen mehreren Elementen, wenn hier verwendet, wird als sowohl individuelle als auch kombinierte Optionen umfassend verstanden. Sind beispielsweise zwei Elemente durch "und/oder" verknüpft, betrifft eine erste Option den Einsatz des ersten Elements ohne das zweite. Eine zweite Option betrifft den Einsatz des zweiten Elements ohne das erste. Eine dritte Option betrifft den Einsatz des ersten und des zweiten Elements zusammen. Es wird verstanden, dass jede beliebige dieser Optionen unter die Bedeutung des Ausdrucks fällt und somit die Bedingungen des Begriffs "und/oder", wie in diesem Dokument verwendet, erfüllt.

Singularformen wie "eine", "ein", "der", "die" oder "das" schließen die Pluralform ein, wenn sie in diesem Dokument verwendet werden. So bezeichnet beispielsweise eine Bezugnahme auf "einen Kolben" sowohl einen einzigen Kolben als auch eine Mehrzahl an Kolben. In einigen Fällen wird explizit der Ausdruck "ein oder mehrere" verwendet, um im jeweiligen Fall darauf hinzuweisen, dass die Singularform die Pluralform mit umfasst. Derartige explizite Hinweise schränken die allgemeine Bedeutung der Singularform nicht ein. Falls nicht anders angegeben, werden die Begriffe "zumindest", "mindestens" und "wenigstens", wenn sie eine Abfolge von Elementen vorangehen, dahingehend verstanden, dass sie sich auf jedes dieser Elemente beziehen. Die Begriffe "zumindest ein", "mindestens ein(e)", "wenigstens einer" oder "wenigstens eine(r) von" schließen beispielsweise ein, zwei, drei, vier oder mehr Elemente ein.

### KURZE BESCHREIBUNG DER ZEICHNUNGEN

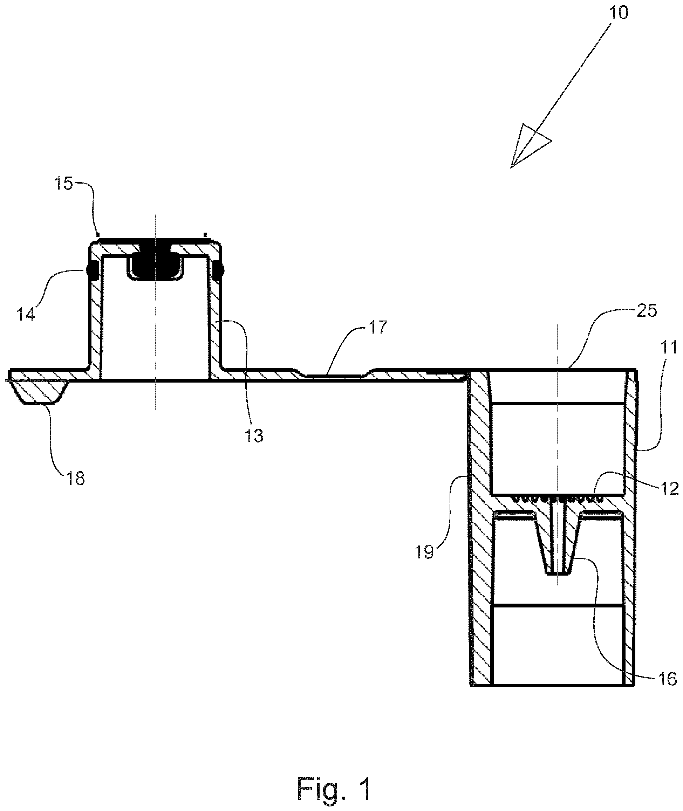

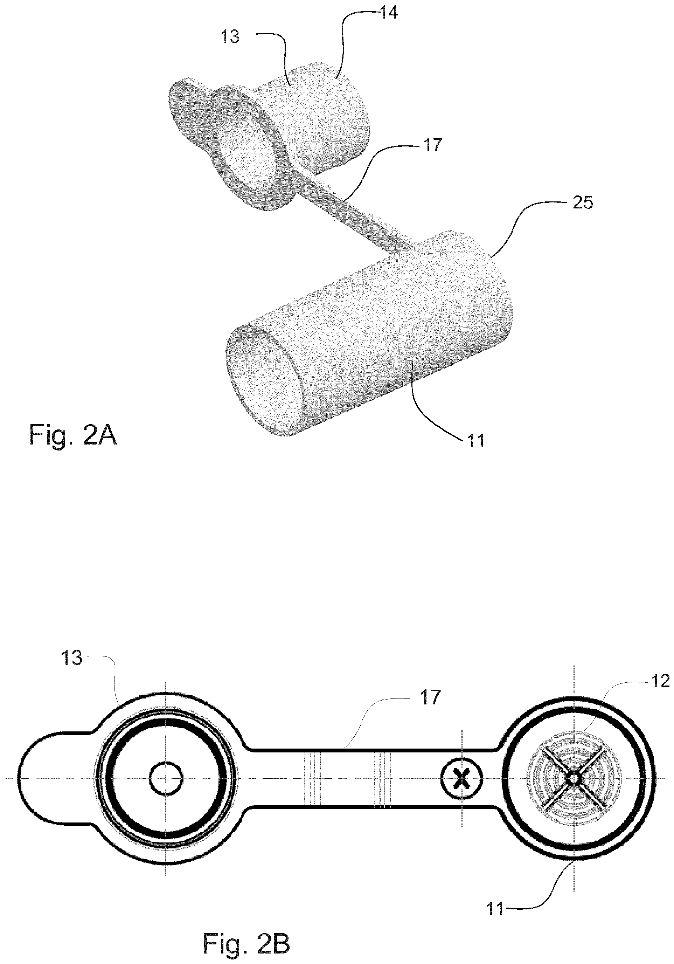

In den Figuren 2A, 2B, 3, 4, 5 und 6 sind Konstruktionszeichnungen widergegeben, so dass sich für die gezeigten beispielhaften Ausführungsformen die Verhältnisse von Dimensionen zueinander den Figuren entnehmen lassen. Bis auf die umlaufende Erhebung 15 entsprechen auch die in Fig. 1 gezeigten Dimensionen im Wesentlichen den Verhältnissen einer tatsächlichen Ausführungsform.
**Figur 1** zeigt eine Filtrationsvorrichtung 10, die einen Tubus 11 aufweist, der über ein Folienscharnier 17 mit einem Kolben 13 verbunden ist. Der Tubus 11 enthält eine Aufnahmeöffnung 25, eine Filterfläche 12 und einen Drip Director 16, sowie eine Führungshilfe 19. Der Kolben 13 weist eine umlaufende Wulst 14 und eine randständig umlaufende Erhebung 15 sowie eine Führungshilfe 18 auf.
**Figur 2A** zeigt in perspektivischer Ansicht die Filtrationsvorrichtung 10 mit Kolben 13, umlaufender Wulst 14, Folienscharnier 17 und Tubus 11 schräg von der Seite. Die Lage der Aufnahmeöffnung 25 des Tubus 11, die verdeckt ist, ist zur Orientierung angegeben. **Figur 2B** zeigt die Filtrationsvorrichtung 10 mit Kolben 13, Folienscharnier 17 und Tubus 11 mit Filterfläche 12 aus der Sicht entlang einer Längsachse des Tubus 11.

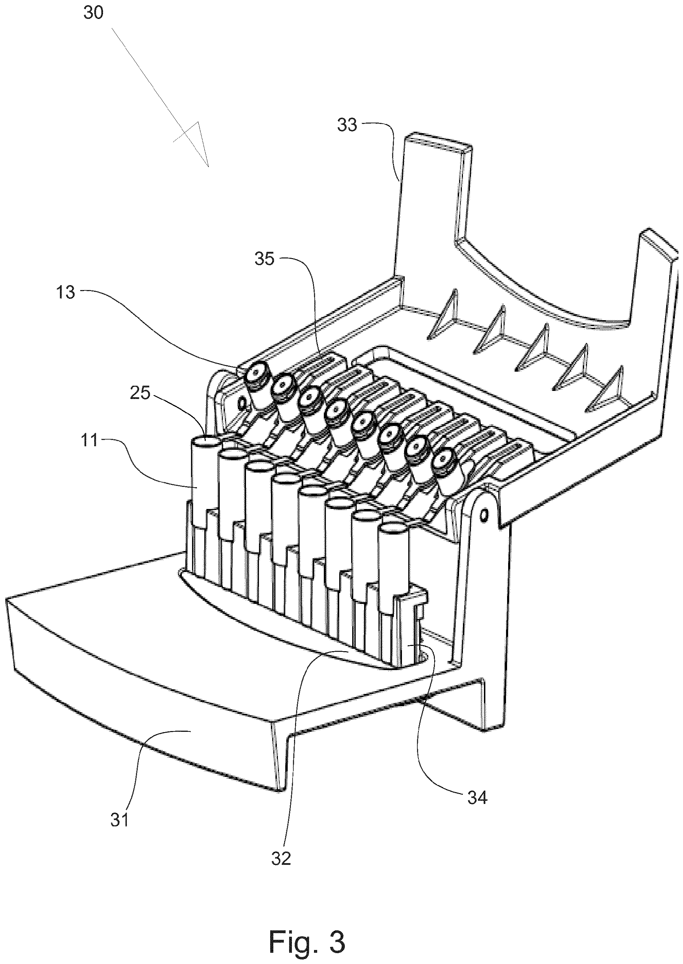

**Figur 3** zeigt eine Schließ- und Durchdrückvorrichtung 30, die einem Standfuß 31 mit einem Stellplatz 32 für Auffanggefäße und einer Mehrzahl an Führungshilfen 34, sowie einen Deckel 33 mit einer Mehrzahl an Führungshilfen 35 aufweist. In der Schließ- und Durchdrückvorrichtung 30 ist eine Mehrzahl an Filtrationsvorrichtungen 10 mit Kolben 13 und Tubuli 11, inklusive Aufnahmeöffnungen 25, positioniert.

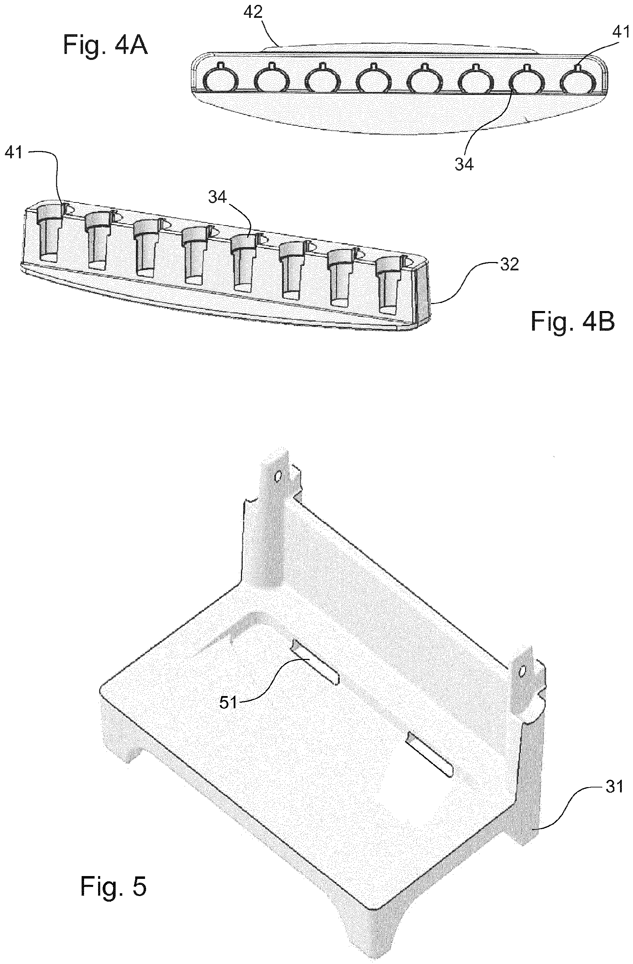

**Figur 4A** zeigt in Draufsicht einen Stellplatz 32 für Auffanggefäße einer Schließ- und Durchdrückvorrichtung 30, der eine Protrusion 42 sowie eine Mehrzahl an Führungshilfen 34 mit jeweils einer Nut 41 aufweist. **Figur 4B** zeigt in perspektivischer Ansicht den Stellplatz 32 mit Führungshilfen 34 und Nuten 41 schräg von der Seite.
**Figur 5** zeigt einen Standfuß 31 einer Schließ- und Durchdrückvorrichtung 30 mit Ausnehmungen 51.

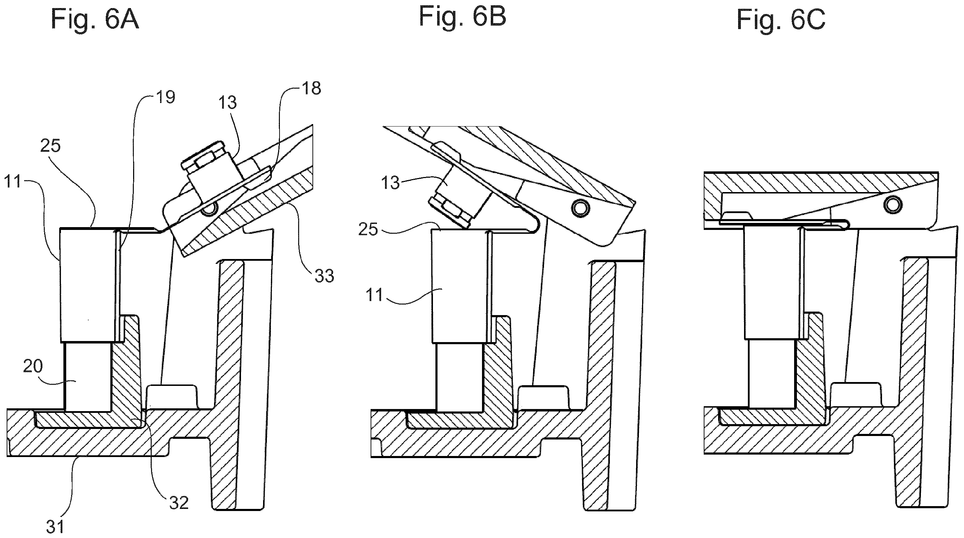

**Figur 6** zeigt die Verwendung einer Filtrationsvorrichtung 10 in einer Schließ- und Durchdrückvorrichtung 30. In einem Stellplatz 32 in einem Standfuß 31 befinden sich Auffanggefäße 20. Oberhalb der Auffanggefäße 20 sind die Tubuli 11 der Filtrationsvorrichtung inklusive ihrer Führungshilfen 19 angeordnet. **Fig**. **6A** zeigt einen geöffneten Zustand, in dem die Deckel 33 der Schließ- und Durchdrückvorrichtung mitsamt der Kolben 13, inklusive der Wulste 18, die Aufnahmeöffnungen 25 der Tubuli 11 freigeben. **Fig. 6B** zeigt einen geöffneten Zustand, in dem die Deckel 33 auf die Aufnahmeöffnungen 25 zu bewegt sind. **Fig. 6C** zeigt einen geschlossenen Zustand, in dem die Deckel 33 die Tubuli 11 verschließen. Die Kolben 13 sind daher von außen nicht erkennbar.

### AUSFÜHRLICHE BESCHREIBUNG BEVORZUGTER AUSFÜHRUNGSFORMEN

Die Filtrationsvorrichtung, das Kit und die Schließ- und Durchdrückvorrichtung werden durch die im Folgenden gezeigten und diskutierten Figuren und Beispiele genauer erläutert. Dabei ist zu beachten, dass die Figuren und Beispiele nur beschreibenden Charakter haben und nicht dazu gedacht sind, die zu Grunde liegende Erfindung in irgendeiner Form einzuschränken.

Fig. 1 zeigt eine Filtrationsvorrichtung 10 für flüssige Proben, die einen Tubus 11 in Form eines senkrechten Hohlzylinders aufweist. Der Tubus 11 weist eine Eingangs- und eine Ausgangsseite auf, die eine Längsrichtung definieren, sowie eine quer zur Längsrichtung angeordnete Filterfläche 12. Filtrationsvorrichtung 10 weist auch einen Kolben 13 auf, der formschlüssig von der Eingangsseite ausgehend in den Tubus 11 einführbar ist, dergestalt, dass eine in dem Tubus oberhalb der Filterfläche befindliche flüssige Probe durch die Filterfläche gepresst wird. Die Filterfläche 12 dient als Auflage für eine Filtermatrix, die in Fig. 1 nicht dargestellt ist.

Der Kolben 13 weist zur Abdichtung gegen die Innenwand des Tubus 11 eine umlaufende Wulst 14 auf, die beispielsweise mittels 2K-Verfahren an den Kolben angeformt ist. Hierbei wird ein Material mit geeigneten Dichteigenschaften (weicher bzw. elastischer) verwendet. Auf diese Weise kann der Kolben leichtgängiger gemacht und die Dichtung gleichzeitig verbessert werden.

Der Kolben 13 weist ferner auf seiner der Filterfläche 12 zugewandten Seite eine randständig umlaufende Erhebung 15 auf, die in Fig. 1 überhöht dargestellt ist. Mithilfe dieser randständig umlaufendem Erhebung wird beim Einführen des Kolbens 13 in den Tubus 11 verhindert, dass die Filtermatrix verletzt wird, beispielsweise durch zwischen Kolben und Filtermatrix befindliche Partikel oder durch Unebenheiten der Filterfläche 12 Es wird ferner eine Adhäsion der Filtermatrix an den Kolben verhindert.

Die Filterfläche 2 weist in Richtung der Ausgangsseite des Tubus 11 einen Drip Director 16 auf.

Der Kolben 13 ist mittels eines Folienscharniers 17 mit dem Tubus 11 verbunden. Dabei kann die Kombination aus Tubus 11 und Kolben 13 einstückig hergestellt sein, beispielsweise mittels Spritzgussverfahren.

Ferner sind erkennbar eine auf der Richtung Eingangsseite weisenden Seite des Kolbens angeordnete Führungshilfe 18 und eine an eine an der Außenwand des Tubus 11 angeordnete Führungshilfe 19.

Erstere ist in Form eines Stegs ausgebildet, der in eine entsprechende Nut in einer Schließ- und Durchdrückvorrichtung eingreift, bei deren Betätigung der Kolben mittels einer reproduzierbaren Bewegung in den Tubus eingeführt wird, dergestalt, dass eine in dem Tubus oberhalb der Filterfläche befindliche flüssige Probe durch die Filterfläche gepresst wird.

Letztere ist in Form eines Stegs ausgebildet, der in eine entsprechende Nut in einem Stellplatz für ein Auffanggefäß mit darauf angeordneter Filtrationsvorrichtung eingreift und so eine reproduzierbare Ausrichtung der Filtrationsvorrichtung ermöglicht.

Fig. 2 zeigt eine Filtrationsvorrichtung aufweisend einen Tubus 11 sowie einen Kolben 13 in Schräg (Fig. 2A) bzw. Draufsicht (Fig. 2B). Die zuvor diskutierten Führungshilfen sind in Fig. 2 nicht dargestellt

Fig. 3 zeigt die eine Schließ- und Durchdrückvorrichtung 30 für die zuvor beschriebene eine Filtrationsvorrichtung, aufweisend einen Standfuß 31, einen an den Standfuß angeordneten Stellplatz 32 für Auffanggefäße, sowie einen an dem Standfuß anscharnierten Deckel 33.

Der Deckel 33 ist so ausgestaltet, dass bei einer Schließbewegung des Deckels 32 um die Scharnierachse in Richtung des Standfußes 31 ein Kolben 13 einer Filtrationseinrichtung in den Tubus 11 der Filtrationsvorrichtung eingeführt wird.

Dabei ist besagte Filtrationsvorrichtung auf einem in dem Stellplatz befindlichen Auffanggefäß angeordnet.

Der Deckel 33 der Schließ- und Durchdrückvorrichtung 30 weist ferner Führungshilfen 35 für die Kolben 13 der Filtrationsvorrichtungen auf. Diese Führungshilfen sind in Form einer Nut ausgebildet, in welche entsprechende auf der in Richtung Eingangsseite weisenden Seite der Kolbens 13 der Filtrationsvorrichtung angeordnete Stege eingreifen.

Fig. 4 zeigt den Stellplatz 32 für Auffanggefäße in einer aus dem Standfuß 31 herausnehmbaren Ausgestaltung. Der Stellplatz 32 weist Führungshilfen 34 für die Filtrationsvorrichtungen 10 auf, die eine Nut 41 enthalten, in welche entsprechende Stege an der Tubusaußenwand der Filtrationsvorrichtungen eingreifen.

Der herausnehmbare Stellplatz 32 weist ferner eine Protrusion 42 auf, die beim Verbringen in den Standfuß 31 in eine komplementäre Ausnehmung am Standfuß eingreift, um ein Umkippen des Stellplatzes zu verhindern.

Fig. 5 zeigt den Standfuß 31 der Schließ- und Durchdrückvorrichtung, der Ausnehmungen 51 aufweist, in welche die diskutierten Protrusionen am Stellplatz eingreifen.

Fig. 6 zeigt den Filtrationsprozess in einer Schließ- und Durchdrückvorrichtung 30 in drei Teilschritten. In einem Standfuß 31 sind Stellplätze 32 angeordnet, in denen Auffanggefäße 20 angeordnet sind. Oberhalb der Auffanggefäße 20 sind die Filtrationsvorrichtungen 10 angeordnet. Wie bereits vorangehend erläutert, enthalten diese einen Tubus 11, eine nicht dargestellte Filterfläche sowie einen Kolben 13, der formschlüssig in den Tubus 11 einführbar ist. Die Schließ- und Durchdrückvorrichtung weist ferner einen an dem Standfuß 31 anscharnierten Deckel 33 auf.

Ferner sind erkennbar eine auf der Richtung Eingangsseite weisenden Seite des Kolbens 11 angeordnete Führungshilfe 18 und eine an eine an der Außenwand des Tubus 11 angeordnete Führungshilfe 19.

Die Führungshilfe 18 ist in Form eines Stegs ausgebildet, der in eine entsprechende Nut in dem Deckel 33 der Schließ- und Durchdrückvorrichtung eingreift. Bei der Betätigung des Deckels wird, wie in den Figuren 6B und 6C gezeigt, der Kolben mittels einer reproduzierbaren Bewegung in den Tubus 11 eingeführt, dergestalt, dass eine in dem Tubus oberhalb der Filterfläche befindliche flüssige Probe durch die Filterfläche gepresst wird.

Die Führungshilfe 19 ist in Form eines Stegs ausgebildet, der in eine entsprechende Nut 41 in dem Stellplatz 32 für ein Auffanggefäß mit darauf angeordneter Filtrationsvorrichtung eingreift und so eine reproduzierbare Ausrichtung der Filtrationsvorrichtung in dem Stellplatz ermöglicht.

## Patentansprüche

1. Filtrationsvorrichtung (10) für flüssige Proben, aufweisend
a) einen Tubus (11) aufweisend eine Eingangs- und eine Ausgangsseite, die eine Längsrichtung definieren,
b) eine quer zur Längsrichtung angeordnete Filterfläche (12), sowie
c) einen Kolben (13), der formschlüssig von der Eingangsseite ausgehend in den Tubus einführbar ist, dergestalt, dass eine in dem Tubus oberhalb der Filterfläche befindliche flüssige Probe durch die Filterfläche gepresst wird,
wobei der Kolben mittels eines Scharniers (17) mit dem Tubus verbunden ist.

2. Filtrationsvorrichtung gemäß Anspruch 1, wobei Tubus und/oder Kolben aus einem Material ausgewählt aus der Gruppe enthaltend Polyethylen, Polypropylen, Polyvinylidenfluorid, Polyetheretherketon, und/oder Hart-Polyethylen (High Density Polyethylen) hergestellt sind.

3. Filtrationsvorrichtung gemäß einem der vorherigen Ansprüche, wobei die Filterfläche als Auflage für eine Filtermatrix fungiert.

4. Filtrationsvorrichtung gemäß einem der vorherigen Ansprüche, wobei die Filtermatrix auf die Filterfläche fixiert ist.

5. Filtrationsvorrichtung gemäß einem der vorherigen Ansprüche, wobei der Kolben auf seiner der Filterfläche zugewandten Seite eine randständig umlaufende Erhebung (15) aufweist.

6. Filtrationsvorrichtung gemäß einem der vorherigen Ansprüche, wobei die Filterfläche in Richtung der Ausgangsseite des Tubus einen Drip Director (16) aufweist.

7. Filtrationsvorrichtung gemäß einem der vorherigen Ansprüche, wobei der Kolben zur Abdichtung gegen die Innenwand des Tubus
a) eine umlaufende Wulst oder
b) eine umlaufende Nut für einen Dichtungsring (14)
aufweist.

8. Filtrationsvorrichtung gemäß einem der vorherigen Ansprüche, wobei die Filtrationsvorrichtung
a) eine an der Außenwand des Tubus (11) angeordnete Führungshilfe (19), und/oder
b) eine auf der Richtung Eingangsseite weisenden Seite des Kolbens angeordnete Führungshilfe (18)
aufweist.

9. Kit bestehend aus einer Filtrationsvorrichtung gemäß einem der vorherigen Ansprüche und einem Auffanggefäß.

10. Schließ- und Durchdrückvorrichtung (30) aufweisend eine Filtrationsvorrichtung gemäß einem der vorherigen Ansprüche, wobei die Schließ- und Durchdrückvorrichtung weiterhin aufweist:
• einen Standfuß (31)
• mindestens einen an dem Standfuß angeordneten Stellplatz (32) für ein Auffanggefäß, sowie
• einen an dem Standfuß anscharnierten Deckel (33),
wobei der Deckel so ausgestaltet ist, dass bei einer Schließbewegung des Deckels um die Scharnierachse in Richtung des Standfußes ein Kolben einer Filtrationseinrichtung in den Tubus einer Filtrationsvorrichtung eingeführt wird und
wobei besagte Filtrationsvorrichtung auf einem in dem Stellplatz befindlichen Auffanggefäß angeordnet ist.

11. Schließ- und Durchdrückvorrichtung gemäß Anspruch 10, wobei
a) der Stellplatz für mindestens ein Auffanggefäß eine Führungshilfe für die Filtrationsvorrichtung bzw. den Tubus derselben, und/oder
b) der Deckel eine Führungshilfe für den Kolben mindestens einer Filtrationsvorrichtung
aufweist.

12. Schließ- und Durchdrückvorrichtung gemäß Anspruch 10 oder 11, wobei der Stellplatz für ein Auffanggefäß aus dem Standfuß herausnehmbar ausgestaltet ist.

13. Schließ- und Durchdrückvorrichtung gemäß Anspruch 12, wobei der herausnehmbare Stellplatz eine Ausnehmung oder Protrusion (42) aufweist, die beim Verbringen in den Standfuß in eine komplementäre Protrusion oder Ausnehmung (51) am Standfuß eingreift, um ein Umkippen des Stellplatzes zu verhindern.

## Claims

1. A filtration device (10) for liquid samples, comprising
a) a tube (11) comprising an inlet end and an outlet end, which define a longitudinal direction,
b) a filter surface (12) arranged transversely to the longitudinal direction, and
c) a piston (13) form-lockingly insertable into the tube from the inlet end, such that a liquid sample located above the filter surface within the tube is being pressed through the filter surface,
wherein the piston is connected to the tube by means of a hinge (17).

2. The filtration device according to claim 1, wherein the tube and/or the piston are made of a material selected from the group comprising polyethylene, polypropylene, polyvinylidene fluoride, polyether ether ketone, and/or high density polyethylene.

3. The filtration device according to any of the preceding claims, wherein the filter surface acts as a support for a filter matrix.

4. The filtration device according to any of the preceding claims, wherein the filter matrix is fixed onto the filter surface.

5. The filtration device according to any of the preceding claims, wherein the piston comprises a circumferential elevation (15) at an edge of the end facing the filter surface.

6. The filtration device according to any of the preceding claims, wherein the filter surface comprises a drip director (16) facing the outlet end of the tube.

7. The filtration device according to any of the preceding claims, wherein the piston comprises
a) a circumferential bead or
b) a circumferential notch for a sealing ring (14)
for sealing against the inner wall of the tube.

8. The filtration device according to any of the preceding claims, wherein the filtration device comprises
a) a guide (19) arranged at the outer wall of the tube (11), and/or
b) a guide (18) arranged at the end of the piston pointing in the same direction as the inlet end.

9. A kit consisting of a filtration device according to any of the preceding claims and a collection vessel.

10. A close and push-through device (30) comprising a filtration device according to any of the preceding claims, the close and push-through device further comprising:
• a base (31)
• at least one positioning site (32) for a collecting vessel at the base (31), and
• a lid (33) hinged to the base,
wherein the lid is configured to introduce a piston of a filtration device into the tube of a filtration device during a closing movement of the lid about the hinge axis toward the base, and
wherein said filtration device is arranged on a collecting vessel in the positioning site.

11. The close and push-through device according to claim 10, wherein
a) the positioning site (32) for at least one collecting vessel comprises a guide for a filtration device or the tube thereof, and/or
b) the lid comprises a guide for the piston of at least one filtration device.

12. The close and push-through device according to claim 10 or 11, wherein the positioning site for a collecting vessel is removable from the base.

13. The close and push-through device according to claim 12, wherein the removable positioning site comprises a recess or protrusion (42), which when being introduced into the base, engages a complementary protrusion or recess (51) at the base, to prevent tipping of the positioning site.

## Revendications

1. Dispositif de filtration (10) d'échantillons liquides, comportant
a) un tube (11) comportant un côté entrée et un côté sortie, qui définissent une direction longitudinale,
b) une surface filtrante (12), placée à la transversale de la direction longitudinale, ainsi
c) qu'un piston (13), qui est introductible par complémentarité de forme à partir du côté entrée dans le tube, de telle sorte qu'un échantillon liquide se trouvant dans le tube, au-dessus de la surface filtrante soit pressé à travers la surface filtrante,
le piston étant relié avec le tube au moyen d'une charnière (17).

2. Dispositif de filtration selon la revendication 1, le tube et/ou le piston étant fabriqués dans une matière choisie dans le groupe comprenant le polyéthylène, le polypropylène, le polyfluorure de vinylidène, le polyétheréthercétone, et/ou le polyéthylène dur (High Density Polyethylen).

3. Dispositif de filtration selon l'une quelconque des revendications précédentes, la surface filtrante faisant office de support pour une matrice filtrante.

4. Dispositif de filtration selon l'une quelconque des revendications précédentes, la matrice filtrante étant fixée sur la surface filtrante.

5. Dispositif de filtration selon l'une quelconque des revendications précédentes, sur son côté qui fait face à la surface filtrante, le piston comportant une élévation (15) marginale périphérique.

6. Dispositif de filtration selon l'une quelconque des revendications précédentes, la surface filtrante comportant, dans la direction de sortie du tube, un Drip Director (guide-gouttes) (16).

7. Dispositif de filtration selon l'une quelconque des revendications précédentes, le piston comportant, pour l'étanchéité par rapport à la face intérieure du tube,
a) un bourrelet périphérique ou
b) une rainure périphérique pour une bague d'étanchéité (14).

8. Dispositif de filtration selon l'une quelconque des revendications précédentes, le dispositif de filtration comportant
a) un auxiliaire de guidage (19) placé sur la face extérieure du tube (11), et/ou
b) un auxiliaire de guidage (18) placé sur le côté du piston dirigé vers le côté entrée.

9. Kit composé d'un dispositif de filtration selon l'une quelconque des revendications précédentes et d'un récipient collecteur.

10. Dispositif destiné à fermer et à exprimer par pression (30) comportant un dispositif de filtration selon l'une quelconque des revendications précédentes, le dispositif de fermeture et de traversée par pression comportant par ailleurs :
• un pied (31)
• au moins un emplacement de dépose (32) placé sur le pied pour un récipient collecteur, ainsi
• qu'un couvercle (33), relié par charnière avec le pied,
le couvercle étant conçu de telle sorte que lors d'un mouvement de fermeture du couvercle autour de l'axe de la charnière dans la direction du pied, un piston d'un système de filtration est introduit dans le tube d'un dispositif de filtration et le dispositif de filtration cité étant placé sur un récipient collecteur se trouvant sur l'emplacement de dépose.

11. Dispositif destiné à fermer et à exprimer par pression selon la revendication 10,
a) l'emplacement de dépose comportant pour au moins un récipient collecteur un auxiliaire de guidage pour le dispositif de filtration ou le tube de celui-ci, et/ou
b) le couvercle comportant un auxiliaire de guidage pour le piston d'au moins un dispositif de filtration.

12. Dispositif destiné à fermer et à exprimer par pression selon la revendication 10 ou 11, l'emplacement de dépose pour un récipient collecteur étant conçu de manière à pouvoir être extrait du pied.

13. Dispositif destiné à fermer et à exprimer par pression selon la revendication 12, l'emplacement de dépose extractible comportant un évidement ou une protrusion (42), qui lorsqu'on le met dans le pied s'engage dans une protrusion ou un évidement (51) complémentaire dans le pied, pour empêcher un basculement de l'emplacement de dépose.
